# EUROPÄISCHE PATENTSCHRIFT

(11) **EP 1 229 282 B1**
(45) Veröffentlichungstag und Bekanntmachung des Hinweises auf die Patenterteilung: **02.07.2008**
(21) Anmeldenummer: 02075453.7
(22) Anmeldetag: 01.02.2002
(51) Int. Cl.: F16L 3/227

(54) **Adapter zur Klemmschellemontage**
Adaptor for the mounting of clamping collar
Adaptateur pour le montage de collier de fixation

(30) Priorität: 02.02.2001 DE 20101785 U
(43) Veröffentlichungstag der Anmeldung: 07.08.2002
(73) Patentinhaber: StarQuick International Ltd., 6386 Wolfenschiessen (CH)
(72) Erfinder: van Walraven, Jan, 3641 GP Mijdrecht (NL)
(74) Vertreter: Brookhuis, Hendrik Jan Arnold

(56) Entgegenhaltungen:
- EP-A- 1 209 398
- DE-C- 19 609 440
- GB-A- 2 154 648
- US-A- 4 306 697
- US-A- 5 048 775

## Beschreibung

Die Erfindung betrifft eine Adapter zur Montage von eine oder mehrere Klemmschellen, insbesondere aus Kunststoff, mit einem Sockelteil zur ortsfesten Anordnung der Klemmschelle und Klemmelementen zum Einklemmen eines Rohres oder eines ähnlichen zylindrischen Langformteiles, wobei das Sockelteil eine Ausnehmung zum Durchstecken eines Befestigungsmittels sowie einen mindestens zu einer Sockelseitenfläche offenen Querschlitz aufweist.

Eine derartige Klemmschelle ist beispielsweise aus der DE 196 09 440 C1 bekannt. Bei dieser Klemmschelle sind am Sockelteil an den parallel zur Mittelachse der Rohrdurchführung des Klemmteils gerichteten Seitenflächen Anreihmittel zum Anreihen von Klemmschellen mit gleichartig ausgebildeten Anreihmitteln ausgebildet. Ähnliche Klemmschellen sind aus der DE 27 08 292 C3 bekannt.

Klemmschellen gattungsgemäßer Art haben sich im Stand der Technik bewährt. Bei der herkömmlichen Verlegung werden solche Klemmschellen beispielsweise mittels Schraube und Dübel an einer Wandung oder dergleichen befestigt.

Sofern eine parallele Verlegung von beispielsweise zwei Rohren erforderlich ist, sind aus der Stand der Technik Adapter algemein bekannt. Diese bekannte Adapter weisen ein streifenförmiges Befestigungsteil auf das mit einem oder mehreren Löcher für jeweils eine Befestigungsschraube versehen ist. In eine bekannte Ausbildung ist das Befestigungsteil für jede Klemmschelle mit einem Aufsteckteil versehen das in die Querschlitz der Klemmschelle stecken kann. In eine andere bekannte Ausbildung des Adapters ist für jede Klemmschelle ein Zapfen vorgesehen, wobei den Zapfen in die Ausnehmung für die Befestigungsschraube in der Sockel der Klemmschelle passt und in Art einer Bajonetverschluss durch drehen der Schelle um 90 Grad damit verrasten kann. Die bekannte Adapter erlauben aber auch nach der Verrastung noch immer eine Bewegung der Schelle.

Aus US 5,048,775 ist eine Kombination eines Adapters mit einer oder mehreren Klemmschellen entsprechend der Präambel von Anspruch 1 bekannt.

Ausgehend von diesem Stand der Technik liegt der Erfindung die Aufgabe zugrunde, eine Adapter für Klemmschelle gattungsgemäßer Art zu schaffen, die eine einfache und sichere Verlegung von eine oder mehrere Rohren an einer Wandung, Montageschiene oder dergleichen ermöglicht.

Zur Lösung dieser Aufgabe schlägt die Erfindung vor, dass die Kombination von mindestens einer Klemmschelle und einem Adapter vorgesehen ist nach Anspruch 1. Diese Ausbildung erlaubt eine einfache und sichere Montage.

Diese Ausbildung eignet sich für eine Klemmschelle bei der am Sockelteil an den parallel zur Mittelachse der Rohrdurchführung des Klemmteils gerichteten Seitenflächen Anreihmittel zum Anreihen von Klemmschellen mit gleichartig ausgebildeten Anreihmitteln ausgebildet. Diese Ausbildung des Adapters stellt eine exakte Ausrichtung jeder an dem Adapter befestigte Klemmschelle sicher. Falschmontagen sind prinzipiell ausgeschlossen. Insbesondere ist die Verbindung zwischen Klemmschelle und Adapter sehr verwindungssteif, so dass eine stabile Halterung und Anordnung erreicht ist.

Bevorzugt weist der Adapter eine Befestigungsebene auf zum Anliegen des Adapter an einer Wandung oder dergleichen und ist der Adapter derart ausgebildet, dass die Unterseite einer montierte Klemmschelle fluchtet mit der Befestigungsebene des Adapters und so auch an der Wandung anliegt. Dadurch wird erreicht dass der Abstand eines Rohres zum Wandung bei Verwendung eines Adapters gleich ist an dem Abstand indem eine Klemmschelle ohne Adapter direct an der Wandung befestigt wird. Weiter bewirkt das directe Kontakt der Klemmschelle mit der Wandung eine weitere Stabilisation der Lage der Klemmschelle.

Sofern die Anordnung von beispielsweise zwei zueinander parallelen Rohrsträngen erforderlich ist, so kann bei der Vormontage zunächst die Befestigung der Adapter nach zum Beispiel Anspruch 6 an den entsprechenden Wandflächen oder dergleichen erfolgen, indem beispielsweise eine Dübel in die Wandfläche eingebracht wird und eine mit eine Ausnehmung versehene Adapter zu den Dübel ausgerichtet und anschließend das Befestigungsmittel, beispielsweise eine Schraube, eingedreht wird. Die Ausnehmung, die zum Durchstecken des Befestigungsmittels dient, kann als Langloch ausgebildet sein, so dass eine gewisse Ausrichtung des Adapters möglich ist. Anschließend kann auf die Adapter jeweils eine Klemmschelle so aufgesteckt werden, dass die Rastteile in den Querschlitz hinein geführt sind. Indem bei dieser Zuführung einer Klemmschelle zudem die Anreihmittel ineinander greifen, dann ist eine exakte Verschiebung und auch Halterung ermöglicht. In der Endposition verrastet die Klemmschelle auf dem Rastteil.

In die Ausbildung gemass Anspruch 6 ist der Abstand der beiden Klemmschellen voneinander exakt eingehalten und über den gesamten Verlegeweg gleich, da die Anordnung an den entsprechenden Adaptern stets in gleicher Weise und gleicher Ausrichtung erfolgt.

Auch ist es möglich zuerst die Klemmschelle(n) an den Adapter zu befestigen und danach die Montage an der Wandung vorzunehmen.

Bevorzugt ist vorgesehen, dass der Querschlitz im Querschnitt im Wesentlichen rechteckig und jedes Steckführungsteil des Adapters im Querschnitt U-förmig ausgebildet ist, so dass in der Montagesolllage die Basis der U-Form an der unteren Begrenzungswand des Querschlitzes und die Schenkel an den Seitenbegrenzungswänden des Querschlitzes anliegen. Hierdurch ist eine besonders verwindungssteife und stabile Befestigung ermöglicht.

Zudem ist bevorzugt vorgesehen, dass das Rastteil des Adapters als federnde, von dem jeweiligen Wandungsteil entgegen Aufsteckrichtung der Klemmschelle abragende Rastzunge ausgebildet ist, deren Rastkante in Montagesolllage hinter einer Rastkante der Ausnehmung des Sockelteils verrastet. Durch diese Ausbildung ist es möglich, die an sich schon an der Klemmschelle vorhandene Ausnehmung zur Verrastung zu verwenden, so dass eine besondere Ausbildung der Klemmschelle nicht erforderlich ist. Vielmehr kann die Ausnehmung einerseits zur Durchführung von Befestigungsmitteln dienen, sofern die Klemmschelle allein an einer Wandfläche oder dergleichen mittels Schrauben befestigt werden soll oder aber die Ausnehmung kann in Kombination mit dem Adapter als Raste bzw. Rastkante dienen.

Aus Gründen der Steifigkeit und auch der Materialersparnis wird zudem bevorzurgt, dass das Befestigungteil des Adapters als zur Montagefläche hin offener Quader ausgebildet ist, wobei im Bereich der Ausnehmung eine rohrartige Verlängerung an die Deckfläche des Quaders angeschlossen ist, die mit den Seitenwänden des Quaders fluchtend endet.

Zudem ist bevorzugt vorgesehen, dass das Rastteil des Adapters bei in Montagesolllage befindlicher Klemmschelle durch die Ausnehmung des Sockelteils von der Oberseite her zugänglich und betätigbar ist.Hierdurch ist es in einfacher Weise möglich, die Klemmschelle auch wieder von dem Adapter zu lösen, indem beispielsweise mit der Klinge eines Schraubendrehers in die Ausnehmung des Sockelteils eingegriffen wird, um die Raste zu lösen.

Die Klemmschelle und der Adapter sind vorzugsweise aus Kunststoff hergestellte Formteile, die für sich gesehen jeweils einstückig aus Kunststoff hergestellt sind.

Ein Ausführungsbeispiel der Erfindung ist in der Zeichnung dargestellt und im Folgenden näher beschrieben.Es zeigt:
Figur 1 einen erfindungsgemäßen Adapter sowie eine erfindungsgemäße Klemmschelle in isometrischer Ansicht;

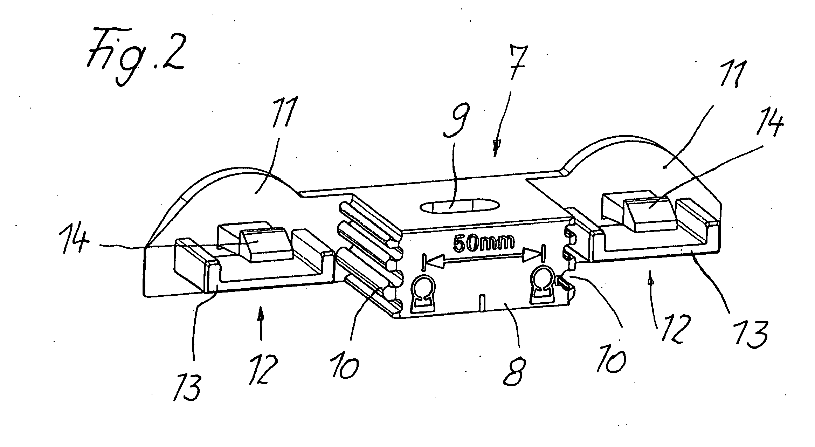

Figur 2 den Adapter von der anderen Seite her gesehen ebenfalls in isometrischer Darstellung;
Figur 3 u. 4 das zusammenwirken der Steckführungs- und Rastteile von Adapter und Klemmschelle im Schnitt gesehen.

In den Zeichnungen ist eine Klemmschelle 1 gezeigt, die als Spritz-/Gießteil aus Kunststoff hergestellt ist. Sie weist einen Sockelteil 2 zur ortsfesten Befestigung der Klemmschelle 1 auf, wobei von dem Sockelteil ein gabelähnliches Klemmteil mit Klemmarmen 3 abragt, welches zum Einklemmen eines Rohres oder eines ähnlichen Langformteiles dient. Am Sockelteil 2 sind an den parallel zur Mittelachse der Rohrdurchführung des Klemmteiles gerichteten Seitenflächen Anreihmittel 4 zum Anreihen von Klemmschellen mit gleichartig ausgebildeten Anreihmitteln ausgebildet. Die Anreihmittel 4 bestehen aus parallel zur Rohrdurchführung des Klemmteiles verlaufenden von den Seitenflächen des Sockelteils 2 abragenden Stege mit verdickten Enden und Nuten, in die entsprechend der Stegverdickung in Erweiterungen die Stegverdickungen eingreifen können.

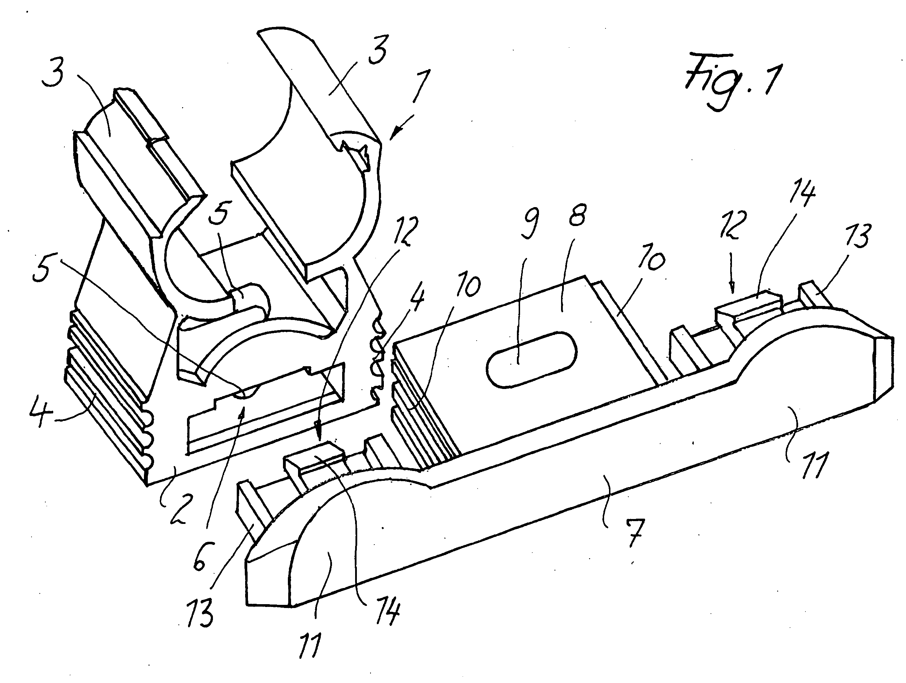

Das Sockelteil 2 weist ferner mittig eine Ausnehmung 5 auf, die zum Durchstecken eines Befestigungsmittels, beispielsweise einer Schraube dient, wobei die Ausnehmung als Langloch ausgebildet ist. Desweiteren weist das Sockelteil 2 einen zu der in Figur 1 vorderen Sockelseitenfläche offenen Querschlitz 6 auf.

Ferner ist ein Adapter 7 vorgesehen, der hier ein etwa quaderförmiges Befestigungsteil 8 aufweist, welches wiederum eine Ausnehmung 9 - bevorzugt in Form eines Langloches - aufweist, die zum Durchstecken eines Befestigungsmittels, beispielsweise einer Schraube dient.

An den zueinander parallelen Seitenflächen des Befestigungteils 8 sind entsprechende Anreihmittel 10 ausgebildet, die mit Anreihmitteln 4 an Klemmschellen 1 korrespondieren und damit zusammenwirken können.

Diese Anreihmittel 10 bestehen aus parallel zur Rohrdurchführung des Klemmteils verlaufenden, von Seitenflächen des Sockelteils 2 abragenden Stegen mit verdickten Enden und Nuten mit entsprechend der Stegverdickung erweitertem Nutgrund.

An einer Seitenfläche des Teils 8, die frei von Anreihmitteln 10 ist, ist beidseits die Ausbildung von Wandungsteilen 11 vorgesehen, die eine Verlängerung der entsprechenden Seitenfläche des Teils 8 bilden, quer zur Seite mit Anreihmittel 10. Von diesen verlängernden Wandungsteilen 11 ragen parallel zueinander gerichtete Steckführungs- und Rastteile 12 ab, auf die jeweils eine Klemmschelle 1 mit dem Querschlitz 6 aufsteckbar ist, wobei die Anreihmittel 4 der Klemmschelle 1 mit den Anreihmitteln 10 des Adapters 7 dann in Eingriff sind. Dabei sind die Klemmschellen 1 dann mit dem Sockelteil auf die Steckführungs- und Rastteile 12 aufgesteckt und daran verrastet.

Der Querschlitz 6 ist im Wesentlichen im Querschnitt rechteckig ausgebildet, wobei jedes Steckführungsteil 13 des Adapters 7 im Querschnitt U-förmig ausgebildet ist, so dass in der Montagesolllage die Basis dieser U-Form an der unteren Begrenzungswand des Querschlitzes 6 und die Schenkel an den Seitenbegrenzungswänden des Querschlitzes 6 anliegen.

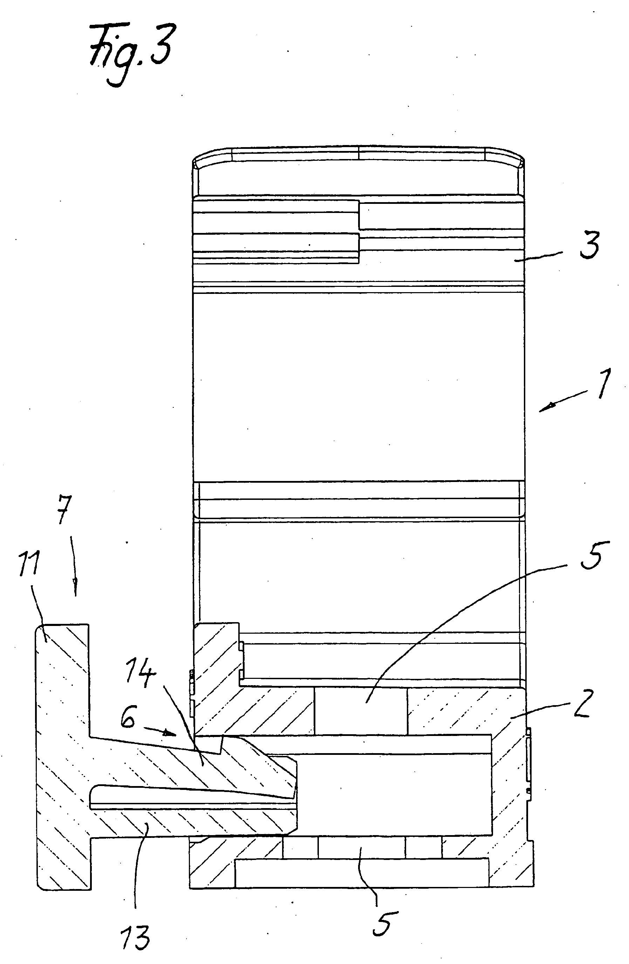

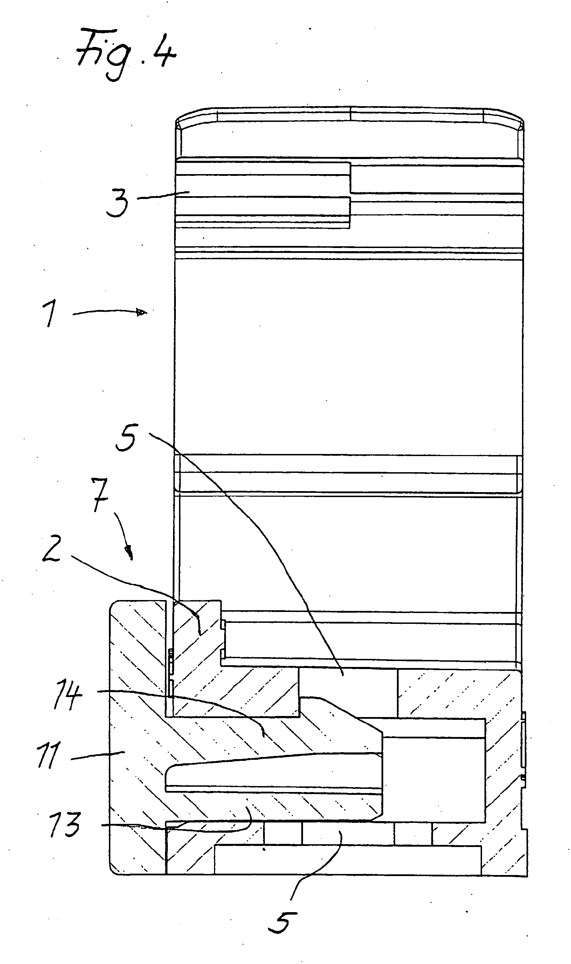

Das Rastteil 14 des Adapters 7 ist jeweils als federnde, von dem jeweiligen Wandungsteil 11 entgegen Aufsteckrichtung der Klemmschelle 1 abragende Rastzunge 14 ausgebildet, deren Rastkante in Montagesolllage hinter einer Rastkante der Ausnehmung 5 des Sockelteils 2 der Klemmschelle 1 verrastet, wie insbesondere aus der Darstellung gemäß Figur 3 und 4 ersichtlich ist. Das Teil 8 des Adapters 7 ist hier exakt mittig zwischen den Steckführungs- und Rastteilen 12 der beiden Wandungsteile 11 ausgebildet. Im Übrigen ist das Teil 8 als zur Montagefläche (in Figur 1 nach unten) hin offener Quader ausgebildet, wobei im Bereich der Ausnehmung 9 eine Verlängerung an die Deckfläche des Quaders angeschlossen ist, die mit den Seitenflächen des Quaders fluchtend in der Befestigungsebene endet.

Das Rastteil 14 des Adapters 7 ist bei in Montagesolllage befindlicher Solllage befindlicher Klemmschelle 1, wie insbesondere aus Figur 4 ersichtlich ist, durch die Ausnehmung 5 des Sockelteils 2 von der Oberseite her zugänglich und betätigbar, so dass beispielsweise durch das Einsetzen der Klinge eines Schraubendrehers die Rastung gelöst werden kann und die Klemmschelle 1 von dem Adapter 7 abgezogen werden kann.

Diese Ausbildung des Adapters ermöglicht die feste Anordnung von zwei parallelen Klemmschellen, um zwei Rohrleitungen parallel zueinander verlegen zu können, wobei eine exakte Ausrichtung zwangsläufig erreicht wird und eine Falschmontage auszuschließen ist. Zudem ist die Rastverbindung verdeckt und bei in die Klemmschelle 1 eingesetzten Rohren nicht zugänglich. Die Konstruktion ist in der Montagesolllage gemäß Figur 4 verwindungssteif und einfach zu handhaben.

Die Erfindung ist nicht auf das Ausführungsbeispiel beschränkt, sondern im Rahmen der Offenbarung vielfach variabel. So kann der Adapter auch derart ausgebildet sein dass die einfache Montage an eine Montageschiene oder dergleichen möglich ist.

## Patentansprüche

1. In Kombination: ein Adapter zur Montage von eineroder mehreren Klemmschellen (1) die eine einfache und sichere Verlegung von einem oder mehreren Rohren an einer Wandung, Montageschiene oder dergleichen ermöglicht; und eine oder mehrere Klemmschellen (1), insbesondere aus Kunststoff, mit einem Sockelteil (2) und Klemmelementen zum Einklemmen eines Rohres oder eines ähnlichen zylindrischen Langformteiles, wobei das Sockelteil (2) eine Ausnehmung (5) zum Durchstecken eines Befestigungsmittels sowie einen mindestens zu einer Sockelseitenfläche offenen Querschlitz (6) aufweist,
wobei der Adapter (7) weiter mit einem Wandungsteil (11) versehen ist, von dem ein Rastteil (12) abragt, auf dem eine Klemmschelle (1) mit dem Querschlitz (6) aufsteckbar ist,
**dadurch gekennzeichnet,**
**dass** am Sockelteil (2) der Klemmschelle an den parallel zur Mittelachse der Rohrdurchführung des Klemmteils gerichteten Seitenflächen Anreihmittel (4) zum Anreihen von Klemmschellen (1) mit gleichartig ausgebildeten Anreihmitteln (4) ausgebildet sind, und dass ferner der Querschlitz (6) offen ist zu einer Sockelseitenfläche, die frei von Anreihmitteln (4) ist, und
**dass** der Adapter (7) eine Fläche oder zueinander parallelen Flächen bildet mit Anreihmitteln (10) die korrespondieren mit Anreihmittel (4) der Klemmschellen (1), und dass das Wandungsteil (11) des Adapters (7) sich quer zur jeder Fläche mit Anreihmittel erstreckt, und welches Rastteil (12) mit dem Sockelteil (2) der jeweiligen Klemmschelle (1) rastverbindbar ist, wobei die Anreihmittel (4) der Klemmschelle (1) mit den Anreihmitteln (10) des Adapters (7) in Eingriff sind.

2. Kombination nach Ansprüche 1, **dadurch gekennzeichnet, dass** der Adapter (7) ein Befestigungsteil (8) mit einer Ausnehmung (9) zum Durchstecken eines Befestigungsmittels aufweist.

3. Kombination nach einem der Ansprüche 1 bis 2, **dadurch gekennzeichnet, dass** der Adapter eine Befestigungsebene aufweist zum Anliegen des Adapter an einer Wandung oder dergleichen, und **dadurch** dass der Adapter derart ausgebildet ist, dass die Unterseite einer montierte Klemmschelle fluchtet mit der Befestigungsebene des Adapters und so auch an der Wandung anliegt.

4. Kombination nach einem der Ansprüche 1 bis 3, **dadurch gekennzeichnet, dass** der Querschlitz (6) der Klemschelle im Querschnitt im Wesentlichen rechteckig und jedes Rastteil (13) des Adapters (7) im Querschnitt U-förmig ausgebildet ist, so dass in der Montagesolllage die Basis der U-Form an der unteren Begrenzungswand des Querschlitzes (6) und die Schenkel an den Seitenbegrenzungswänden des Querschlitzes (6) anliegen.

5. Kombination nach einem der Ansprüche 1 bis 4, **dadurch gekennzeichnet, dass** das Rastteil (14) des Adapters (7) als federnde, von dem jeweiligen Wandungsteil (11) entgegen Aufsteckrichtung der Klemmschelle (1) abragende Rastzunge ausgebildet ist, deren Rastkante in Montagesolllage hinter einer Rastkante der Ausnehmung (5) des Sockelteils (2) verrastet.

6. Kombination nach einem der Ansprüche 1 bis 5, **dadurch gekennzeichnet, dass** der Adapter ein Befestigungsteil (8) aufweist mit zueinander parallelen Seitenflächen mit Anreihmitteln, welches Befestigungsteil beidseits dieser Seitenflächen von Wandungsteile versehen ist, von denen Rastteile abragen.

7. Kombination nach Anspruch 6, **dadurch gekennzeichnet, dass** das Teil (8) des Adapters (7) mittig zwischen den Steckführungs- und Rastteilen (12) der beiden Wandungsteile (11) ausgebildet ist.

8. Kombination nach einem der Ansprüche 3 bis 7, **dadurch gekennzeichnet, dass** das Teil (8) des Adapters (7) als zur Montagefläche hin offener Quader ausgebildet ist, wobei im Bereich der Ausnehmung (9) eine ,ggf rohratige, Verlängerung an die Deckfläche des Quaders angeschlossen ist, die mit den Seitenwänden des Quaders fluchtend endet.

9. Kombination nach einem der Ansprüche 1 bis 8, **dadurch gekennzeichnet, dass** das Rastteil (14) des Adapters (7) bei in Montagesolllage befindlicher Klemmschelle (1) durch die Ausnehmung (5) des Sockelteils (2) von der Oberseite her zugänglich und betätigbar ist.

10. Kombination nach einem der Ansprüche 1 bis 9, **dadurch gekennzeichnet, dass** das Rastteil (14) als Steckführungsteil ausgebildet ist.

## Claims

1. In combination: an adapter for mounting one or more pipe clips (1), which allows a simple and reliable installation of one or more pipes on a wall, mounting rail or the like; and one or more pipe clips (1), in particular consisting of plastics material, with a base part (2) and cliping elements for cliping a pipe or a similar cylindrical elongate member,
wherein the base part (2) has a recess (5) for the passage of a fastening means and also at least one transverse slot (6) open towards one lateral surface of the base,
wherein the adapter (7) is further provided with a wall part (11), from which projects a detent member (12) on which a pipe clip (1) with the transverse slot (6) can be fitted,
**characterised in**
**that** series installation means (4) for the series installation of pipe clips (1) with similarly formed series installation means (4) are formed on the base part (2) of the pipe clip on the lateral surfaces directed parallel to the centre axis of the pipe passage of the cliping part, and further in that the transverse slot (6) is open towards one lateral surface of the base (6) which is free of series installation means (4), and
in that the adapter (7) forms a surface or mutually parallel surfaces with series installation means (10) which correspond with series installation means (4) of the pipe clips (1), and
in that the wall part (11) of the adapter (7) extends transversely to each surface with series installation means, and which detent member (12) can be in detent connection with the base part (2) of the respective pipe clip (1), wherein the series installation means (4) of the pipe clip (1) are in engagement with the series installation means (10) of the adapter (7).

2. A combination according to claim 1, **characterised in that** the adapter (7) has a fastening member (8) with a recess (9) for the passage of a fastening means.

3. A combination according to one of claims 1 to 2, **characterised in that** the adapter has a fastening plane for applying the adapter against a wall or the like, and **in that** the adapter is so formed that the underside of an installed pipe clip aligns with the fastening plane of the adapter and thus is also applied against the wall.

4. A combination according to any one of claims 1 to 3, **characterised in that** the transverse slot (6) of the pipe clip is of substantially rectangular form in cross-section and each detent member (13) of the adapter (7) is U-shaped in cross-section so that in the desired mounting position the base of the U-shape is applied against the lower boundary wall of the transverse slot (6) and the arms are applied against the lateral boundary walls of the transverse slot (6).

5. A combination according to any one of claims 1 to 4, **characterised in that** the detent member (14) of the adapter (7) is in the form of a resilient detent tongue which protrudes from the respective wall part (11) counter to the fitting direction of the pipe clip (1), the detent edge of which engages in the desired mounting position behind a detent edge of the recess (5) of the base part (2).

6. A combination according to any one of claims 1 to 5, **characterised in that** the adapter has a fastening member (8) with mutually parallel lateral surfaces with series installation means (4), which fastening member is provided on either side of these lateral surfaces of wall parts, from which detent members project.

7. A combination according to claim 6, **characterised in that** the member (8) of the adapter (7) is formed centrally between a plug-type guide and the detent members (12) of the two wall parts (11).

8. A combination according to any one of claims 3 to 7, **characterised in that** the member (8) of the adapter (7) is in the form of a rectangle open towards the mounting surface, wherein in the vicinity of the recess (9) an optionally tubelike extension is attached to the top surface of the rectangle, which ends in alignment with the side walls of the rectangle.

9. A combination according to any one of claims 1 to 8, **characterised in that** with the pipe clip (1) situated in the desired mounting position the detent member (14) of the adapter (7) is accessible and can be actuated from the upper side through the recess (5) of the base part (2).

10. A combination according to any one of claims 1 to 9, **characterised in that** the detent member (14) is in the form of a plug-type guide member.

## Revendications

1. Combinaison comprenant : un adaptateur pour le montage d'un ou plusieurs colliers de serrage (1) et qui permet une pose simple et sûre d'un ou plusieurs tubes sur un mur, rail de montage ou similaire ; et un ou plusieurs colliers de serrage (1), en particulier en matière plastique, comprenant une partie formant socle (2) et des éléments de serrage pour serrer un tube ou une pièce conformée allongée cylindrique semblable, ladite partie formant socle (2) présentant un évidement (5) pour la traversée d'un organe de fixation et une fente transversale ouverte au moins vers une face latérale du socle (6),
dans laquelle l'adaptateur (7) est en outre doté d'une partie formant paroi (11) depuis laquelle fait saillie une partie d'enclenchement (12) sur laquelle un collier de serrage (1) peut être enfiché au moyen de la fente transversale (6),
**caractérisée en ce que**
des organes de mise en rangée (4), destinés à la mise en rangée de colliers de serrage (1) dotés d'organes de mise en rangée (4) de réalisation analogue, sont réalisés sur la partie formant socle (2) des colliers de serrage au niveau des faces latérales orientées parallèlement à l'axe médian de la traversée tubulaire de la partie de serrage,
**en ce que** la fente transversale (6) est en outre ouverte vers une face latérale du socle qui est dépourvue d'organes de mise en rangée (4),
**en ce que** l'adaptateur (7) forme une face ou des faces mutuellement parallèles avec des organes de mise en rangée (10) qui correspondent avec des organes de mise en rangée (4) des colliers de serrage (1), et
**en ce que** la partie formant paroi (11) de l'adaptateur (7) s'étend transversalement à chaque face pourvue d'organes de mise en rangée, et la partie d'enclenchement (12) est susceptible d'être reliée par enclenchement avec la partie formant socle (2) du collier de serrage respectif (1), et les organes de mise en rangée (4) des colliers de serrage (1) sont en engagement avec les organes de mise en rangée (10) de l'adaptateur (7).

2. Combinaison selon la revendication 1, **caractérisée en ce que** l'adaptateur (7) comprend une partie de fixation (8) avec un évidement (9) pour la traversée d'un organe de fixation.

3. Combinaison selon l'une des revendications 1 ou 2, **caractérisée en ce que** l'adaptateur présente un plan de fixation pour appliquer l'adaptateur contre un mur ou similaire, et **en ce que** l'adaptateur est de ce fait réalisé de telle façon que la face inférieure d'un collier de serrage monté est en affleurement avec le plan de fixation de l'adaptateur et s'applique ainsi également contre le mur.

4. Combinaison selon l'une des revendications 1 à 3, **caractérisée en ce que** la fente transversale (6) du collier de serrage est réalisée avec une section transversale essentiellement rectangulaire, et chaque partie d'enclenchement (13) de l'adaptateur (7) est réalisée avec une section en forme de U, de sorte que dans la position de consigne de montage, la base de la forme en U est appliquée contre la paroi de limitation inférieure de la fente transversale (6) et les branches du U sont appliquées contre les parois de limitation latérales de la fente transversale (6).

5. Combinaison selon l'une des revendications 1 à 4, **caractérisée en ce que** la partie d'enclenchement (14) de l'adaptateur (7) est réalisée sous la forme d'une languette d'enclenchement à effet ressort, dépassant de la partie formant paroi respective (11) à l'encontre de la direction d'enfichage du collier de serrage (1), et dont l'arête d'enclenchement vient s'enclencher, dans la position de consigne de montage, derrière une arête d'enclenchement de l'évidement (5) de la partie formant socle (2).

6. Combinaison selon l'une des revendications 1 à 5, **caractérisée en ce que** l'adaptateur comprend une partie de fixation (8) avec des faces latérales mutuellement parallèles et dotées de organes de mise en rangée, ladite partie de fixation étant dotée, des deux côtés de ces faces latérales, de parties de paroi depuis lesquelles dépassent des parties d'enclenchement.

7. Combinaison selon la revendication 6, **caractérisée en ce que** la partie (8) de l'adaptateur (7) est réalisée au milieu entre les parties de guidage d'enfichage et d'enclenchement (12) des deux parties formant paroi (11).

8. Combinaison selon l'une des revendications 3 à 7, **caractérisée en ce que** la partie (8) de l'adaptateur (7) est réalisée sous forme de parallélépipède ouvert vers la surface de montage, et dans la région de l'évidement (9) un prolongement, le cas échéant semblable à un tube, est raccordé à la face supérieure du parallélépipède, ledit prolongement se terminant en affleurement avec les parois latérales du parallélépipède.

9. Combinaison selon l'une des revendications 1 à 8, **caractérisée en ce que** la partie d'enclenchement (14) de l'adaptateur (7) est accessible et actionnable depuis la face supérieure et à travers l'évidement (5) de la partie formant socle (2) lorsque les colliers de serrage (1) se trouvent dans la position de consigne de montage.

10. Combinaison selon l'une des revendications 1 à 9, **caractérisée en ce que** la partie d'enclenchement (14) est réalisée comme une partie de guidage d'enfichage.
